# EUROPEAN PATENT APPLICATION

(11) **EP 3 034 227 A1**
(43) Date of publication of application: **22.06.2016**
(21) Application number: 14460114.3
(22) Date of filing: 17.12.2014
(51) Int. Cl.: B23K 26/06, B23K 26/14, B23K 26/26, B23K 26/32

(54) **Method of butt joints laser welding with fixed power density, heat input and gas mixture**

(71) Applicant: Vlassenroot Polska sp. z o.o., 44-100 Gliwice (PL)
(72) Inventor: Burdzik, Rafal, 41-707 Ruda Slaska (PL); Lisiecki, Aleksander, 44-122 Gliwice (PL); Kolebski, Witold, 41-500 Chorzów (PL); Wegrzyn, Tomasz, 44-114 Gliwice (PL); Wibo, Jean-Charles, 9830 Sint-Martens-Latem (BE)

(57) **Abstract**

The method of butt joints laser welding of plates, carried out as one-side welding, in the atmosphere of shielding gas, characterized in that it is carried out by laser melting of the contact area of plates by means of a laser beam at power density of 1,5x10⁵ W/cm² and at heat input of welding 990 J/mm, simultaneously applying a gas mixture flow composed of 95% argon and 5% carbon dioxide.

## Description

The invention relates to a method of butt joints laser welding of plates, in particular having a thickness of 10.0 mm and made of steel characterized by high strength and high yield point in a range from 690 to 700 MPa.

### BACKGROUND OF THE INVENTION

The water-quenched and tempered, low alloy, high strength and fine-grained structural steels having yield point about 700 MPa are classified as weldable steels. However, providing high mechanical properties of welded joints, in particular tensile strength and impact strength, comparable to the mechanical properties of the welded steel plates, so called base metal, requires a very strict observance of complex technological procedures, including precise selection and control of welding parameters, according to EN 1011-2 standard.

It is also very important to precisely control the preheating and interpass temperature. However, the most important factor is to maintain the heat input of welding in a very narrow range that ensures proper cooling rate and required cooling time in the temperature range from 800 to 500 °C (t_{8/5}). Precise control of the cooling rate and the cooling time t_{8/5} is crucial to ensure proper microstructure and required mechanical properties.

The preheating temperatures and interpass temperatures, as well as the heat input of welding are selected depending on the chemical composition of the steel plate to be welded, i.e. carbon equivalent, type and thickness of the joint.
This type of high strength steels have relatively high value of carbon equivalent (CEV) at around 0.5 even up to 0.65 and thus a high hardenability because their high mechanical properties are achieved during complex treatment of hardening and subsequent tempering in precisely controlled thermal conditions. While welding of this type of steels at too low heat input makes the cooling rate very rapid, over the critical value. Too high cooling rates lead to formation of hard martensitic structure with low plasticity which usually is a direct cause of cold and brittle cracking of welded joints. On the other hand, too high heat input of welding makes the cooling rate very low and leads to excessive grains grow, mainly in the heat affected zone (HAZ). Too low cooling rates make it impossible to obtain the desired microstructure of weld metal and HAZ. As a result of the incorrect thermal conditions of welding at too high heat input the welded joints have very low mechanical strength and impact strength. In practice, just the arc welding methods such as GTAW, GMAW and SMAW allow to provide the required range of heat input of.welding in the case of these type of steels. However, the arc welding methods of butt joints of plates with thickness above 3.0 or 4.0 mm require special preparation of the plate edges by beveling or grooving with the groove angle from 40 up to 60 degrees, depending on the chosen welding method.

Beveling of thick plates is necessary due to the limited penetration depth of arc welding methods. In the case of GMAW welding the maximum penetration depth reaches about 4.0 mm. Next, the groove is usually filled by several weld beads during arc welding.

Thus arc welding of butt joints of high strength, quenched and tampered steel plates in a range of medium and large thickness is very time-consuming, laborious and energy-intensive, and therefore inefficient.

One of the most efficient methods of welding of butt joints in the range of small and medium thickness of plates is laser welding by means of modern laser devices that allow one-side welding of butt joints with a thickness of 10.0 mm without an additional material and without beveling of the plates edges (I joint type). This is possible just by key hole laser welding mode. In such conditions the heat inputs of laser welding are too low to ensure the desired mechanical properties of butt joints of high strength steel plates. While the increase of heat input during laser welding by reducing the welding speed up to the level of heat input required for welding of the high strength steel, leads to a significant increase in the tendency of weld metal porosity, despite the fact that the weld region is protected by inert gas flow, usually pure argon or pure helium.

### SUMMARY OF THE INVENTION

The method of butt joints laser welding of plates, performed from one side of a joint, in the atmosphere of shielding gas, characterized in that it is carried out by melting of the contact area of plates using a laser beam at power density of 1,5x10⁵ W/cm² and at heat input of welding 990 J/mm, simultaneously applying a gas mixture flow composed of 95% argon and 5% carbon dioxide.

Surprisingly, it was found out that application of an active gas mixture of argon with small amount of carbon dioxide for shielding of the welding area during laser welding of 10.0 mm thick butt joint of high strength steel plate with the yield point about 700 MPa can dramatically reduce the tendency of the weld metal porosity, even at relatively high heat input of laser welding.

The active gas mixture with slightly oxidizing potential reduces the surface tension of liquid metal in the weld pool and thus facilitates degassing of the liquid weld metal during the cooling and solidification.

The method of laser welding according to the invention, enables application of one-side and a single bead welding technique without an additional material for welding of butt joints of plates while providing the highest quality of joints characterized by the tensile strength at the same level as the base metal and additionally without any internal defects of weld metal such as porosity.

### The invention is illustrated in the following example.

Steel plates with a thickness of 10.0 mm, made of water-quenched and tempered steel with a yield point of 690 to 700 MPa are pushed up against each other in the configuration of closed square butt joint (I type joint).

The face surfaces of steel plates being in touch are flat and parallel to each other. The laser beam at the power density of 1,5x10⁵ W/cm² is focused on the top surface of the steel plates and it is moved linearly along the joint axis at a constant welding speed of 200 mm/min. The weld area is protected by flow of gas mixture of argon and carbon dioxide, at a content of 5% carbon dioxide. The butt joint is one-side welded, applying just a single bead of the weld by melting of the edges being in contact, without an additional material.

An invention is considered as susceptible of industrial application as it can be used in welding industry.

## Claims

1. The method of butt joints laser welding of plates, carried out as one-side welding, in the atmosphere of shielding gas, **characterized in that** it is carried out by laser melting of the contact area of plates by means of a laser beam at power density of 1,5x10⁵ W/cm² and at heat input of welding 990 J/mm, simultaneously applying a gas mixture flow composed of 95% argon and 5% carbon dioxide.
